# EUROPEAN PATENT SPECIFICATION

(11) **EP 1 580 814 B1**
(45) Date of publication and mention of the grant of the patent: **02.11.2016**
(21) Application number: 03769516.0
(22) Date of filing: 04.11.2003
(51) Int. Cl.: H01L 27/146, H04N 5/335

(54) **PROGRAMMABLE MIXED-SIGNAL INTEGRATED CIRCUIT ARCHITECTURE FOR THE PRODUCTION OF AUTONOMOUS VISION SYSTEMS IN A SINGLE CHIP AND/OR PRE-PROCESSING OF IMAGES IN HIGHER-LEVEL SYSTEMS**
PROGRAMMIERBARE INTEGRIERTE MISCHSIGNALSCHALTUNGSARCHITEKTUR FÜR DIE HERSTELLUNG AUTONOMER SICHTSYSTEME IN EINEM EINZELCHIP UND/ODER VORVERARBEITUNG VON BILDERN IN ÜBERGEORDNETEN SYSTEMEN
ARCHITECTURE DE CIRCUIT INTEGRE PROGRAMMABLE A SIGNAL MIXTE A UTILISER DANS LA PRODUCTION DE SYSTEMES AUTONOMES DE VISION DANS UNE SEULE PLAQUETTE ET/OU DANS LE PRETRAITEMENT D'IMAGES DANS DES SYSTEMES DE NIVEAU SUPERIEUR

(30) Priority: 04.11.2002 ES 200202707
(43) Date of publication of application: 28.09.2005
(73) Proprietor: Innovaciones Microelectronicas, S.l., 41092 Sevilla (ES)
(72) Inventor: RODRIGUEZ VAZQUEZ, Angel, 41012 Sevilla (ES); ESPEJO MEANA, Servando, 41012 Sevilla (ES); DOMINGUEZ CASTRO, Rafael, 41012 Sevilla (ES)
(74) Representative: Escudero Prieto, Nicolás Enrique
(86) International application number: PCT/ES2003/000564
(87) International publication number: WO 2004/042822

(56) References cited:
- EP-A2- 0 853 427
- WO-A2-00/52639

## Description

### OBJECT OF THE INVENTION

The present application refers to a mixed signal programmable integrated circuit architecture for producing autonomous vision systems in a single chip and/or image processing in higher level systems, such as can be gathered from the preamble to claim one.

More specifically, the invention is applicable in integrated electronic systems, artificial vision systems, autonomous artificial vision systems, image processing optoelectronic systems, image capture systems and image processors with concurrent sensing for visual pre-processing tasks with applications in: artificial vision, autonomous vision systems, visual information transmission systems, automatic inspection and quality control systems, automatic control and guiding systems, visual perception systems, toys, and in general applications requiring decision making based on visual information or image processing as part of a higher system, with one or several of the following features regarding the conventional approach based on digitising cameras and digital processors: high speed, low cost, small size and low energy consumption.

### BACKGROUND OF THE INVENTION

The systems currently used in artificial vision tasks and in image processing in general are essentially based on digital processors applied to previously digitised images. For applications in which real-time processing is required it is frequent to use a conventional camera (CCD, for example), an image digitising system (a frame grabber, for example) and a digital processor.

An increasing number of applications exists in which separation of the sensing and the processing in image processing systems results in significant drawbacks and limits to a desirable performance.

Conventional systems have difficulties in reaching high throughput values (number of "actions" per time unit) and/or reduced latency (delay) values. This is caused on the one hand by the time required by the system to capture, convert and transfer very high amounts of data (images), and on the other hand due to the high processing load the digital processor is subjected to. The difference between latency and throughput is relevant in many applications. Latency is the time that passes from the start of sensing until the generation of the response (reaction time), whereas throughput is the frequency with which the system updates its output. Conventional image processing systems, based on the use of digital cameras and processors, could eventually provide a relatively high throughput based on parallelism, with difficulties and accepting a multiplication of costs, but they have serious difficulties to reduce latency, even assuming high costs. Latency is the most relevant parameter in numerous applications. On the other hand, the costs, size and energy consumption of a conventional system with high throughput are generally excessive.

For these reasons there are several lines of research and development directed towards producing image processing systems which avoid or reduce said drawbacks. Several of these lines are focused on developing systems inspired by or which try to emulate in some manner the architecture of vision systems in living beings.

In natural vision systems a front pre-processing part (the retina) exists in which the processing and sensing tasks are performed concurrently (in a simultaneous and spatially distributed manner), based on a set of simple elements combining sensing and processing, locally interconnected to one another. In higher living beings the processing structure is made up of several parallel layers, each one with different functions, also locally interconnected to one another. Information transmitted from the retina to different parts of the brain for higher perception tasks is very small in relation to the raw information contained in the visual flow, with the advantages this entails. This architecture is related to the evident quality, efficiency and simplicity with which living beings perform tasks related to vision which are unimaginable today for most advanced electronic systems.

Technological emulation of this "natural approximation to visual information processing" is based on current integrated circuit manufacturing technologies allowing the coexistence of photosensing devices and conventional processing circuitry on the same silicon substrate.

Thus, the possibility of producing artificial image processing systems in which both photo-transduction and image pre-processing are performed in a spatially distributed, concurrent manner, associating a sensing element and also a processing element to each pixel. Optoelectronic systems resulting from this approach are given the generic name "focal plane processing systems" because they are conceived to be used in the focal plane of an optical system, in which the image is formed and where it is sensed and processed in a concurrent manner. On the other hand, the introduction of a distributed memory concurrent with sensing and processing allows emulating the multilayer structure of natural retinas by means of the use of time multiplexing.

There is currently a great simultaneous effort to develop cameras without processing functions based on conventional CMOS technology. This is due to certain advantages inherent to the use of this technology with respect to the current widespread use of cameras based on charge coupled devices (CCD). It is possible to cite, amongst others, the possibility of randomly accessing the different pixels, less energy consumption, a more accessible and economical technology, and the ease of introducing any type of processing and/or analogue-digital conversion circuitry in the same chip.

Another related line of research, which may be called that of the massively parallel analogue processors, is centred on multidimensional data structure processing systems based on regular distributions of locally interconnected more or less simple processors, which act by all performing the same function at each instant.

Finally, the versatility and efficiency of current digital information processing and storage blocks is well known.

In that relating to focal plane processing systems, the great majority of specific architectures, processing algorithms, and prototypes produced or proposed to date pursue performing simple and specific tasks, which are further preset and are therefore "programmed in the hardware". There are already numerous commercial products in the line of CMOS vision cameras, as well as great progress based on different forms of compression of the luminous intensity range, calibration techniques to compensate the non-ideal characteristics present, and some time-space image filtering techniques to avoid contrast problems and others. This last aspect substantially intersects with the line of focal plane processors. In that regarding massively parallel analogue processors the contributions, productions and proposals performed to date are quite varied, their most significant feature regarding normal focal plane processors being the incorporation of programmability to some measure, as well as storage space for one or several images, following the general strategy of concurrence and spatial distribution to maintain the speed of data transfer operations. These systems normally perform specific processing algorithms on previously stored images or images acquired by means of an external device, transmitted to the massively parallel processor in a serial and electric manner, and cannot therefore be considered focal plane processing systems.

Documents WO-A-0 052 639 and EP-A-0 853 427 disclose image sensing and processing architectures.

### DETAILED DESCRIPTION OF THE INVENTION

The invention is defined in the appended claims. It concerns a specific integrated circuit architecture for image acquisition and processing which may be used to produce autonomous vision systems in a single chip, and which may also be used as a co-processing element specialised in image processing in higher level systems. The proposed architecture is based on a combination of the three lines of research and development mentioned and currently present in the state of the art, combining them in a specific manner, introducing programmability and adding thereto a digital information processing and storage system as a main controlling and decision-making element, allowing the vision system to act autonomously once programmed to perform a specific task.

The proposed architecture is made up around a central element, the sensor-processor, which in turn consists of a regular two-dimensional distribution of identical cells, each of which has certain photosensing, storage, processing, control and data transfer elements. Performance of these operations, as well as the specific parameters they are performed with, are controlled in a global manner (for all the cells at the same time, with spatially uniform values) from circuit elements located on the periphery of the cell distribution. The use of local information (in each cell) is not excluded for selective enabling or modification of the operations performed globally.

Each one of the identical cells of the regular two-dimensional distribution specifically contains the following elements, without excluding the possibility that any of them may be eliminated in specific embodiments,
- One or several photosensors (1) and their adaptation and interface circuitry (2) without excluding the possible existence of interconnections between the different sensors of a same cell or of neighbouring cells at the interface circuitry level, nor the global and/or local programmability of the relevant parameters in the linear or non-linear time-space acquisition and filtering process. At the system level, the sensors of the set of all the cells make up one or several image sensors. The significant optical interface and time-space filtering parameters may be programmable based on the global (spatially invariant) and/or local (using local cell information) parameters.
- One or several analogue storage elements (3) and/or binary storage elements (4), which may be considered pixel memory elements. They constitute a memory of one or several images in grey-scale and/or in "black and white" at a global level. Inclusion of some "read-only image memories" allowing access to significant reference levels for processing, such as for example the end and intermediate levels of the analogue values, is not excluded.
- A local circuitry and connection (5) allowing transferring the content of a determined analogue or binary memory to another specified neighbouring cell according to a spatially invariant programmable shift vector, resulting at a global level in a shift in the entire image. This shift could be performed in a direct or iterative manner, according to circuitry optimisation criteria.
- A processing circuitry (6) based on performing simple analogue operations on weighted sums of contributions of neighbouring cells and that of the cell itself. The term sum must be understood in the algebraic sense: both the variables to be weighted as well as the weighting factors may be positive or negative. The contributions are proportional to the pixel values of an image (analogue or binary) corresponding to each cell and stored therein. The set of contributions for each cell shall come from the set of 3 x 3 adjacent cells centred on the very cell, without excluding other variants. The nine contributions are weighted according to a set of 3 x 3 analogue weighting factors, which are electrically programmable in a global manner (spatially invariant). Extension to the case in which the "weighted sum" is the result of performing and accumulating more than one of the previous weighted sums, generally with different sets of weighting factors and with different source images, is not excluded. Performing the different weighted contributions and their accumulation may be performed in parallel, using sufficient weighting and addition circuitry to that effect, or in a time multiplexed manner, using a smaller circuitry and an accumulation element. Extreme cases of using a single weighting element sequentially applied to the different neighbours and/or images, or of using sufficient weighting elements to obtain weighted sums of contributions proportional to different source images with different sets of weighting coefficients in a single step, are not excluded. Without detriment to others, some examples of simple operations to be performed on the result of the weighted sum are: integration without losses, integration with linear losses, integration with non-linear losses, any of the previous variants with or without saturation, a sign function or threshold comparison, scaling, or simply the identity operator. The analogue coefficients used in performing the operations provided on the result of the weighted sum (losses, saturation levels, scaling factor, comparison threshold, etc., for example) are also programmable in an electrical and spatially invariant manner.
- A circuitry allowing the accumulation of the result of the weighted sum (6) to the content of the pixel memory (analogue) of the cell (3).
- Optionally, the circuitry necessary to perform a pixel by pixel, analogue multiplication between two stored images (6).
- An elementary logical operator (7) acting on the content of the binary memories of each cell. The logical operation to be performed at each moment is globally programmable.
- The control, connecting, and conversion circuitry (8) for allowing transmission of information between the different elements of each cell (e.g. sensors, memories, and processing circuits), always in a simultaneous manner in all the cells, such that they constitute completely parallel image transfers at a system level, with a bus width equal to the number of pixels in the image.
- The control circuitry (7, 8) necessary for the optional use of selective local enabling or modification of some of the processing operations and/or data transfer based on the contents of any of the binary pixel memories of the cell.
- The control circuitry (7), connecting circuitry and possibly the AD and DA conversion circuitry necessary for control of the operations and for information exchange (9) with the exterior of the regular two-dimensional distribution of identical cells in any of the foreseeable manners based on the previously described functionality.

The different circuit elements required for cell operation are located around the regular two-dimensional distribution of identical cells, as well as the following control elements and elements for interconnection with the exterior:
- A contour cell ring (10) surrounding the regular two-dimensional distribution of cells. These cells, used to establish the spatial contour conditions, contain the circuitry required to generate the contributions needed by the adjacent inner cells, but not that used to perform the calculations. The pixel values of the contour cells are globally programmable (for the entire ring).
- A digital data and program processing, control and storage system (11) consisting for example in a microprocessor, a microcontroller, or a digital signal processor, in combination with digital memory blocks. In the most general case, the memories shall contain volatile (RAM) and non-volatile memory blocks, the non-volatile blocks being at least partially programmable. The function of this digital system is the higher control of the tasks performed by the cell distribution, communication of the chip with the exterior and, given the case, processing of the information pre-processed by the cell distribution for high-level decision making.
- Multi-purpose global calculation circuitry (12), intended for obtaining very simplified information from an image stored in the cell distribution. As examples, this circuitry could allow calculating the mean value of an analogue image, the end values, dispersion, and other statistical parameters. The need for incorporating some circuitry at cell level is not excluded. This extracted information may serve, amongst other purposes, for the automatic adjustment of the image acquisition parameters (exposure times, focus, etc.), selection of a certain type of sensor amongst those available, and for global decision making in general.
- A control circuitry (13) of the cell distribution, essentially consisting in a set of digital registers and simple state machines, which may be directed and controlled by the digital processing system. The function of this circuitry is to allow the generation and application of digital control vector sequences to the cell distribution.
- A bank of D/A converters (14), one per programmable analogue coefficient used in the cell set. The converters may be linear or non-linear, including the possibility of conveniently pre-distorting the possible non-linearity existing between the analogue control voltage of the coefficient and the effective value thereof, for example by a feedback mechanism using the same type of scaling block used in the cell circuitry. The digital input data to this bank of converters comes from registers and simple state machines which may be directed and controlled by the digital processing and control system. The output from each converter, in voltage, attacks a global node which is distributed to the cell set. The use of an analogue voltage signal is on account of connexion efficiency.
- A bank of AD and DA converters (15) to interchange analogue images with the exterior of the integrated circuit when necessary or convenient, in a completely digital and serial manner through one or more data buses, with the corresponding control signal and address buses. As with the rest of the system, these converters shall be directly or indirectly controlled by the higher digital control system. The possibility that these converters are produced within the cell distribution "at pixel level" using suitable techniques is not excluded. The possibility of communication by means of analogue data buses is not excluded either, being able to disregard the banks of AD and DA converters in this case.
- Output data compression circuitry (16). A circuit assembly allowing compression and transmission of disperse binary images (with few ones or with few zeros) in a highly efficient manner. Inclusion of these elements is on account of the observation that most vision algorithms use binary and normally dispersed representations of the images at higher levels of the decision chain. As an example, this circuitry could identify whether a certain image is completely black or white by means of a global logical operation on all the pixels of a binary image, detect the position of a single pixel in the regular cell distribution if this is the only black or white pixel in the image by means of the use of "row and column" coders and decoders or the like, or generate a sequence of spatial coordinates corresponding to those of each one of the minority pixels (whites on a black background or vice versa) using usually asynchronous priority strategies. Another example would be the identification of the spatial coordinates of the opposing vertices of areas of the image including minority black pixels on a white background (or vice versa). The inclusion of the circuitry required at pixel level is not excluded.
- Interface circuitry (17). Apart from the optical input, the electrical interface of the integrated circuit is essentially digital, controlled by the internal digital system according to a master clock, and essentially consisting of digital data and address buses, as well as of typical control signal buses used for processes/protocols of read/write, general chip enabling, interruption, functioning mode selection, program execution, etc. In practical embodiments this interface shall be adjusted to an existing digital standard. This responds to the objective of facilitating the tasks of programming and debugging the autonomous system artificial vision algorithms by means of the use of development systems, as well as the convenience of allowing the alternative use of these devices as "slave" devices specialised in capturing and processing images within higher digital systems.

### DESCRIPTION OF THE DRAWINGS

In order to complement the description being made and with the object of aiding towards a better comprehension of the features of the invention according to a preferred practical embodiment thereof, a figure is attached as an integral part of said description wherein a specific example of the vision system architecture integrated in a single chip is shown with an illustrative and non-limiting character, with a symbolic representation of the circuitry and architecture of a basic cell of the sensor-processor, indicating by means of symbols the cell circuitry blocks controlled and/or programmed by means of global signals, the digital memories which may perform local control functions, and the set of neighbours of each cell generally including the very cell.

Regarding the digital control and processing system outside the cell distribution, an example of an architecture based on a processing unit (CPU, DSP or Microcontroller), volatile memory and non-volatile memory, general peripherals and a memory control unit, is shown.

### EMBODIMENT EXAMPLE

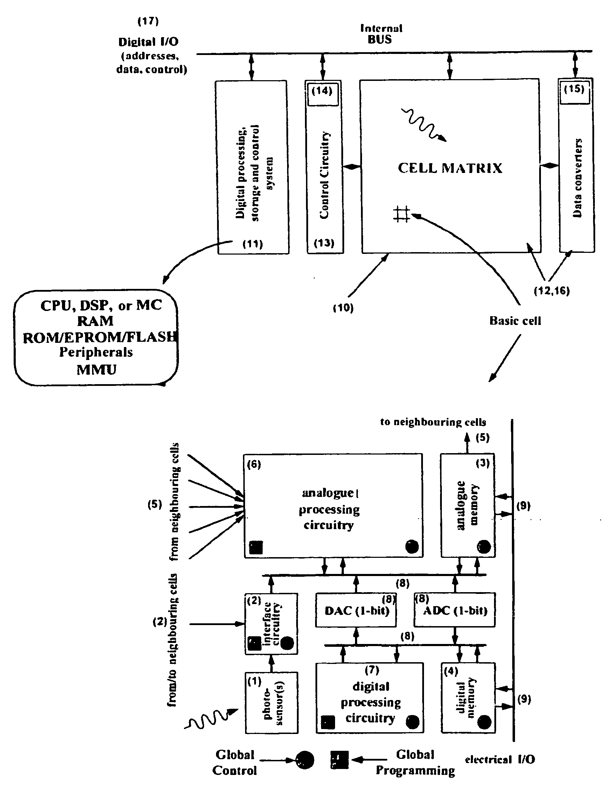

The Figure shows a schematic representation of the system described below as an embodiment example. In this particular case the system has been designed in a single integrated circuit using standard 0.18 micrometer CMOS technology with 2 polysilicon layers and 6 metal layers. The digital processing and control system used in the example is a high performance and low energy consumption digital microprocessor with RISC architecture and 32 bit wide address bus. Said microprocessor includes a cache memory for addresses and data and an arithmetic unit for performing multiplications and divisions in fixed point arithmetic. A 32 Kbyte SRAM memory block and a non-volatile FLASH-RAM type memory block, both integrated, have been used as digital storage units in the embodiment example shown.

An integrated 32 bit wide bus operating at 66 Megahertz is used in this embodiment example as an internal bus to which the digital processing and control system, the integrated memories, the control circuitry, the cell distribution and the data converters are connected.

In this example, the cell distribution contains 88 x 72 elements, corresponding to one fourth of the format known as QCIF (quarter CIF). Each inner cell contains 10 weighting and adding elements, corresponding to contributions from the 3 x 3 neighbouring cells (including the cell itself) and an additional contribution implementing a space-invariant term that is also programmable.

The operation performed on the result of the weighted sum may be chosen by means of programming between the simple evaluation of the result, a continuous-time integration with saturation at the integrator output, or a binarisation based on a threshold comparison.

The cells include eight analogue memories which may be also used as binary memories by means of direct conversion of the datum. These pixel memories act as centralising elements of the information transfer processes within the cell. A binary programmable logical operator has also been included which acts upon the content of the "binary memories". The "binary memory" content may be used to locally enable the dynamic evolution of each cell (integration), as well as the data transfer functions (writing another memory, for example).

The photosensors used, which allow sensing the image focused on the chip by the optical system, provide diverse operating methods, including integrating the photogenerated current in one of several diodes of different natures or even in vertical bipolar diodes, which results in a linear representation of the pixel value in discreet time, and also other schemes resulting in representations with logarithmic compression in continuous time. The local processing and memory circuitry allows easy calibration of the sensors, resolving the greatest drawback of CMOS sensors.

Two global ports are used as output data compression circuitry examples, a NAND and a NOR, each one of them with one input per cell, which allow instantly evaluating from outside whether a certain image is completely white or completely black. Furthermore, a circuitry capable of generating the coordinate pair sequences of all the black pixels in a binary image according to a specific asynchronous priority strategy has been included.

The analogue-digital converters used for programming the cell distribution use conventional architectures. Their outputs represent the values of weighting factors corresponding to the described weighted sum circuitry, the spatial contour condition values and reference levels used by the analogue circuitry. Each value for each coefficient is encoded by 7 bits plus a sign bit. For its part, the digital control vector of the cell distribution has a width of 48 bits.

The external interface essentially consists in the data and address buses of the digital control system, along with a small number of signals serving the usual purposes of synchronising and controlling the reading and writing processes, of generally enabling the external interface of the chip, of resetting, and selecting operating modes (e.g. programming, execution, etc.).

In this example, the total silicon area occupied by the system described in the Figure, in the 0.18 µm technology used, is 25 mm².

## Claims

1. A mixed signal programmable integrated circuit architecture for image processing in a single chip, capable of performing image sensing, preprocessing, storage and autonomous post-processing, which comprises:
a) a regular two-dimensional spatial distribution of locally interconnected identical cells which combine the capabilities of photo-transduction, pre-processing over analogue and binary images and storing them, and
b) a digital post-processing and storage system;
and wherein each cell of said regular two-dimensional spatial distribution of identical cells comprises means for computing one or several weighted sums of neighbouring cell contributions by means of programmable analogue circuitry, these weighted sums being achieved as the basis for the image early-processing algorithms,
and wherein each cell of said regular two-dimensional spatial distribution of identical cells comprises:
- at least one photosensor (1) and its adaptation and interface circuitry (2);
- at least one analogue memory (3) and at least one binary memory (4), which at the system level make up image memories the pixels of which have respective analogue or binary values,
- a weighting and addition circuitry (6) in which the weighting factors used in calculating the weighted sums are electrically programmable in a spatially uniform manner,
- processing circuitry (6) responsible for performing simple operations on the result of adding one or several weighted sums of neigbouring cell contributions proportional to one or several images, the relevant coefficients for performing said operations also being electrically programmable in a spatially invariant manner;
- control and connection circuitry for data exchange between said photosensors, memories and processing circuits at cell level, simultaneously in all cells, such that they make up image transfers in a completely parallel manner at system level, with a bus width equal to the number of pixels in the image;
**characterized in that** it further comprises:
- conversion circuitry and
- a local circuitry and connection (5) configured for allowing transferring the content of a respective analogue or binary memory to another specified neighbouring cell according to a spatially invariant programmable shift vector, thus resulting at a global level in a shift in the entire image.

2. A mixed signal programmable integrated circuit architecture according to claim 1, wherein each cell has elements for photosensing, storage, processing, control and data transfer operations, wherein performance of these operations and the parameters for performing these operations are controlled in a global manner, for all the cells at the same time, with spatially uniform values, from circuit elements located on the periphery of the cell distribution.

3. A mixed signal programmable integrated circuit architecture according to claim 2, wherein said operations and the parameters for performing said operations are also locally controlled in each cell, for selective enabling or modification of said globally performed operations.

4. A mixed signal programmable integrated circuit architecture according to any preceding claim, wherein said processing circuitry (6) is configured for performing said weighted sums in a time multiplexed manner using circuitry and an accumulation element.

5. A mixed signal programmable integrated circuit architecture according to any preceding claim, further comprising circuitry (7, 8) for use of selective local enabling or modification of any of the processing or data transfer operations at cell level based on the content of any of the binary pixel memories of the cell.

6. A mixed signal integrated circuit architecture according to claim 1 further comprising interconnections at the interface circuitry (2) level between the photosensors of the same cell or between photosensors of adjacent cells for purposes of linear or non-linear time-space filtering, and the significant parameters of the optical interface and the time-space filtering being programmable based on global or local parameters.

7. A mixed signal integrated circuit architecture according to claim 1, wherein each one of the cells comprises circuitry for pixel by pixel multiplication of two previously stored images.

8. A mixed signal integrated circuit architecture according to claim 1 wherein each one of the cells comprises circuitry for performing logical operations, programmable in a spatially invariant manner, between binary pixel values corresponding to different previously stored images.

9. A mixed signal integrated circuit architecture according to claim 1, wherein each one of the cells comprises circuitry for transferring the content of a given analogue memory (3) or binary memory (4) to another neighbouring cell specified according to a programmable shift vector in a spatially invariant manner, and said shift being performed in a direct or iterative manner, according to circuitry optimization criteria.

10. A mixed signal integrated circuit architecture according to claim 1, further comprising banks of AD and DA data converters (15) in the cell matrix periphery for two-way exchange of grey scale digitalised images in a serial manner with the exterior of the integrated circuit, through one or more digital data buses, and the corresponding control signals and address buses.

11. A mixed signal integrated circuit architecture according to claim 10, further comprising data buses for a two-way exchange of grey scale digitalised images in a serial manner, with the exterior of the integrated circuit.

12. A mixed signal integrated circuit architecture according to any preceding claim, further comprising a cell ring (10) surrounding the spatially regular cell distribution, used to establish the spatial contour conditions in the image processing algorithms, and these contour conditions being electrically programmable.

13. A mixed signal integrated circuit architecture according to any preceding claim, further comprising a dedicated global circuitry for compressing (16) and transmitting disperse binary images outside the preprocessing array of cells, with components both inside the cells (12) and in the peripheral circuitry (16).

14. A mixed signal integrated circuit architecture according to any preceding claim, further comprising analogue circuitry (12) at both a cell level and a global level for calculating global image parameters.

15. A mixed signal integrated circuit architecture according to any preceding claim, further comprising a digital processing, storage and control system (11) for performing the tasks of controlling the cell distribution and the system as a whole, information and external communication processing, according to a pyre-established program stored in the internal memories.

## Patentansprüche

1. Programmierbare integrierte Mischsignalschaltungsarchitektur zur Bildverarbeitung in einem Einzelchip, welche in der Lage ist eine Bilderfassung, Vorverarbeitung, Speicherung und autonome Nachverarbeitung durchzuführen, umfassend:
a) eine regelmäßige zweidimensionale räumliche Verteilung von identischen örtlich zusammengeschalteten Zellen, welche die Einsatzmöglichkeiten der Phototransduktion, Vorverarbeitung über Analog- und Binärbilder und Speicherung derselben kombinieren, und
b) ein digitales Nachverarbeitungs- und Speichersystem;
und wobei jede Zelle der genannten regelmäßigen zweidimensionalen räumlichen Verteilung von identischen Zellen Mittel zur Berechnung von einer oder mehreren gewichteten Summen von Nachbarzellenbeiträgen mittels einer programmierbaren analogen Schaltungsanordnung umfasst, wobei diese gewichteten Summen als Basis für die frühzeitigen Bildverarbeitungsalgorithmen erzielt werden,
und wobei jede Zelle der genannten regelmäßigen zweidimensionalen räumlichen Verteilung von identischen Zellen Folgendes umfasst:
- mindestens einen Photodetektor (1) und dessen Anpassungs- und Schnittstellenschaltungsanordnung (2);
- mindestens einen Analogspeicher (3) und mindestens einen binären Speicher (4), welche auf Systemebene Bildspeicher ausmachen, deren Pixel jeweilige Analog- oder Binärwerte aufweisen,
- eine Gewichtungs- und Additionsschaltungsanordnung (6), in welcher die bei der Berechnung von gewichteten Summen verwendeten Gewichtungsfaktoren in einer räumlichen gleichmäßigen Weise elektrisch programmiert werden können,
- eine Verarbeitungsschaltungsanordnung (6), welche dafür zuständig ist, einfache Vorgänge in Bezug aus das Ergebnis der Addition einer oder mehreren gewichteten Summen von Nachbarzellenbeiträgen proportional zu einem oder mehreren Bildern durchzuführen, wobei die relevanten Koeffizienten zur Durchführung der genannten Vorgänge auch in einer räumlichen unveränderlichen Weise elektrisch programmiert werden können;
- eine Steuer- und Anschlussschaltungsanordnung für den Datenaustausch zwischen den genannten Photodetektoren, Speichern und Verarbeitungsschaltungen auf Zellebene, in allen Zellen gleichzeitig, sodass sie Bildübertragungen in einer vollständig parallelen Weise auf Systemebene ausmachen, mit einer Busbreite, welche der Anzahl von Pixeln im Bild gleich ist;
**dadurch gekennzeichnet, dass** sie zusätzlich:
- eine Umsetzungsschaltungsanordnung und
- eine örtliche Schaltungsanordnung und einen örtlichen Anschluss (5), welche dazu ausgebildet sind, die Übertragung des Inhalts eines jeweiligen Analog- oder binäre Speicher auf eine andere spezifizierten Nachbarzelle gemäß einem räumlichen unveränderlichen programmierbaren Verschiebungsvektor zu ermöglichen, sodass auf globaler Ebene eine Verschiebung des gesamten Bildes erhalten wird,
umfasst.

2. Programmierbare integrierte Mischsignalschaltungsarchitektur nach Anspruch 1, wobei jede Zelle Elemente für Photodetektions-, Speicherungs-, Verarbeitungs-, Steuer- und Datenübertragungsvorgänge aufweist, wobei die Durchführung dieser Vorgänge und die Parameter für die Durchführung dieser Vorgänge global gesteuert werden, für alle Zellen gleichzeitig, mit räumlichen gleichmäßigen Werten, aus Schaltungselementen, welche sich auf dem Umfang der Zellenverteilung befinden.

3. Programmierbare integrierte Mischsignalschaltungsarchitektur nach Anspruch 2, wobei die genannten Vorgänge und die Parameter für die Durchführung der genannten Vorgänge auch in jeder Zelle örtlich gesteuert werden, für die selektive Freigabe oder Veränderung der genannten global durchgeführten Vorgänge.

4. Programmierbare integrierte Mischsignalschaltungsarchitektur nach einem der vorhergehenden Ansprüche, wobei die genannte Verarbeitungsschaltungsanordnung (6) dazu ausgebildet ist, die genannten gewichteten Summen mittels Zeitmultiplex unter Verwendung einer Schaltungsanordnung und einem Akkumulationselement durchzuführen.

5. Programmierbare integrierte Mischsignalschaltungsarchitektur nach einem der vorhergehenden Ansprüche, zusätzlich umfassend eine Schaltungsanordnung (7, 8) für die Verwendung der selektiven örtlichen Freigabe oder Veränderung von jeglichem der Verarbeitungs- oder Datenübertragungsvorgänge auf Zellebene basierend auf dem Inhalt von jeglichem der binären Pixelspeicher der Zelle.

6. Integrierte Mischsignalschaltungsarchitektur nach Anspruch 1, zusätzlich umfassend Zusammenschaltungen auf der Ebene der Schnittstellenschaltungsanordnung (2) zwischen den Photodetektoren der gleichen Zelle oder zwischen Photodetektoren von angrenzenden Zellen zum Zwecke des linearen oder nicht linearen Zeit-Raum-Filterung, und wobei die signifikanten Parameter der optischen Schnittstelle und der Zeit-Raum-Filterung basierend auf globalen oder örtlichen Parametern programmiert werden können.

7. Integrierte Mischsignalschaltungsarchitektur nach Anspruch 1, wobei jede der Zellen eine Schaltungsanordnung für die Pixel-für-Pixel-Multiplikation von zwei zuvor gespeicherten Bildern umfasst.

8. Integrierte Mischsignalschaltungsarchitektur nach Anspruch 1, wobei jede der Zellen eine Schaltungsanordnung für die Durchführung von logischen Operationen, in einer räumlichen unveränderlichen Weise programmierbar, zwischen binären Pixelwerten, welche unterschiedlichen zuvor gespeicherten Bildern entsprechen, umfasst.

9. Integrierte Mischsignalschaltungsarchitektur nach Anspruch 1, wobei jede der Zellen eine Schaltungsanordnung für die Übertragung des Inhalts eines gegebenen Analogspeichers (3) oder binären Speichers (4) auf eine andere Nachbarzelle, spezifiziert gemäß einem programmierbaren Verschiebungsvektor in einer räumlichen unveränderlichen Weise, umfasst, und wobei die genannte Verschiebung in einer direkten oder iterativen Weise, gemäß Optimierungskriterien der Schaltungsanordnung, durchgeführt wird.

10. Integrierte Mischsignalschaltungsarchitektur nach Anspruch 1, zusätzlich umfassend Banken von AD- und DA-Datenumsetzern (15) auf dem Zellmatrixumfang für einen beidseitigen serienmäßigen Austausch von digitalisierten Graustufenbildern mit dem Äußeren der integrierten Schaltung, über einen oder mehrere digitalen Datenbusse, und die entsprechenden Steuersignale und Adressbusse.

11. Integrierte Mischsignalschaltungsarchitektur nach Anspruch 10, zusätzlich umfassend Datenbusse für einen beidseitigen serienmäßigen Austausch von digitalisierten Graustufenbildern mit dem Äußeren der integrierten Schaltung.

12. Integrierte Mischsignalschaltungsarchitektur nach einem der vorhergehenden Ansprüche, zusätzlich umfassend einen Zellenring (10), welcher die räumliche regelmäßige Zellenverteilung, welche für die Herstellung der räumlichen Konturbedingungen in den Bildverarbeitungsalgorithmen verwendet wird, umgibt, und wobei diese Konturbedingungen elektrisch programmiert werden können.

13. Integrierte Mischsignalschaltungsarchitektur nach einem der vorhergehenden Ansprüche, zusätzlich umfassend eine dedizierte globale Schaltungsanordnung für die Kompression (16) und Übertragung von zerstreuten Binärbilder außerhalb der Vorverarbeitungsmatrix von Zellen, mit Komponenten sowohl innerhalb der Zellen (12) als auf der umfangseitigen Schaltungsanordnung (16).

14. Integrierte Mischsignalschaltungsarchitektur nach einem der vorhergehenden Ansprüche, zusätzlich umfassend eine analoge Schaltungsanordnung (12) sowohl auf Zellebene als auch auf globaler Ebene für die Berechnung von globalen Bilderparametern.

15. Integrierte Mischsignalschaltungsarchitektur nach einem der vorhergehenden Ansprüche, zusätzlich umfassend ein digitales Verarbeitungs-, Speicherungs- und Steuerungssystem (11) für die Durchführung der Aufgaben der Steuerung der Zellenverteilung und des Systems als Ganzes, der Verarbeitung von Information und externe Kommunikation, gemäß einem in den internen Speichern gespeicherten vorgegebenen Programm.

## Revendications

1. Architecture de circuit intégré programmable à signal mixte pour le traitement d'images dans une seule puce, capable de réaliser la détection, le prétraitement, le stockage et post-traitement autonome d'une image, comprenant :
a) une répartition spatiale bidimensionnelle régulière de cellules identiques interconnectées localement qui combinent les capacités de photo-transduction, de prétraitement d'images analogiques et binaires et de stockage de celles-ci, et
b) un système numérique de post-traitement et de stockage ;
et où chaque cellule de ladite répartition spatiale bidimensionnelle régulière de cellules identiques comprend un moyen pour calculer une ou plusieurs sommes pondérées des contributions de cellules voisines par le biais d'un circuiterie analogique programmable, ces sommes pondérées étant obtenues comme base pour les algorithmes dans les premières étapes de traitement des images,
et où chaque cellule de ladite répartition spatiale bidimensionnelle régulière de cellules identiques comprend :
- au moins un photodétecteur (1) et sa circuiterie (2) d'adaptation et d'interface;
- au moins une mémoire (3) analogique et au moins une mémoire (4) binaire, qui constituent au niveau du système des mémoires d'images dont les pixels ont des valeurs analogiques ou binaires respectives,
- une circuiterie (6) de pondération et d'addition dans laquelle les facteurs de pondération utilisés dans le calcul des sommes pondérées sont électriquement programmables de manière spatialement uniforme,
- circuiterie (6) de traitement chargé de réaliser des opérations simples sur le résultat de l'addition d'une ou plusieurs sommes pondérées des contributions de cellules voisines proportionnelles à une ou plusieurs images, les coefficients pertinents pour la réalisation desdites opérations étant également électriquement programmables de manière spatialement invariante ;
- circuiterie de contrôle et de connexion pour l'échange de données entre lesdits photodétecteurs, mémoires et circuits de traitement au niveau des cellules, de façon simultanée dans toutes les cellules de manière à ce qu'elles constituent des transferts d'images de manière complètement parallèle au niveau du système, avec une largeur de bus égale au nombre de pixels dans l'image ;
**caractérisée en ce qu'**elle comprend en outre :
- une circuiterie de conversion et
- une circuiterie et une connexion (5) locales configurées pour permettre le transfert du contenu d'une mémoire analogique ou binaire respective à une autre cellule voisine spécifiée selon un vecteur de décalage programmable spatialement invariant, entraînant donc au niveau global un décalage dans l'image entière.

2. Architecture de circuit intégré programmable à signal mixte selon la revendication 1, où chaque cellule possède des éléments pour les opérations de photodétection, stockage, traitement, contrôle et transfert de données, où la réalisation de ces opérations et les paramètres pour réaliser ces opérations sont contrôlés de manière globale, pour toutes les cellules en même temps, avec des valeurs spatialement uniformes, à partir des éléments de circuit situés sur la périphérie de la répartition des cellules.

3. Architecture de circuit intégré programmable à signal mixte selon la revendication 2, où lesdites opérations et les paramètres pour réaliser lesdites opérations sont également localement contrôlés dans chaque cellule, pour l'habilitation ou la modification sélective desdites opérations réalisées globalement.

4. Architecture de circuit intégré programmable à signal mixte selon l'une quelconque des revendications précédentes, où ladite circuiterie (6) de traitement est configurée pour réaliser lesdites sommes pondérées de manière multiplexée dans le temps en utilisant la circuiterie et un élément d'accumulation.

5. Architecture de circuit intégré programmable à signal mixte selon l'une quelconque des revendications précédentes, comprenant en outre une circuiterie (7, 8) pour l'utilisation de l'habilitation ou la modification locale sélective de l'une quelconque des opérations de traitement ou de transfert de données au niveau des cellules basée sur le contenu de l'une quelconque des mémoires de pixels binaires de la cellule.

6. Architecture de circuit intégré à signal mixte selon la revendication 1, comprenant en outre des interconnexions au niveau de la circuiterie (2) d'interface entre les photodétecteurs de la même cellule ou entre les photodétecteurs de cellules adjacentes à des fins de filtrage spatio-temporel linéaire ou non-linéaire, et les paramètres significatifs de l'interface optique et le filtrage spatio-temporel étant programmables basés sur des paramètres généraux ou locaux.

7. Architecture de circuit intégré à signal mixte selon la revendication 1, où chacune des cellules comprend une circuiterie pour la multiplication pixel par pixel de deux images précédemment stockées.

8. Architecture de circuit intégré à signal mixte selon la revendication 1, où chacune des cellules comprend une circuiterie pour réaliser des opérations logiques, programmables de manière spatialement invariante, entre des valeurs de pixels binaires correspondant aux différentes images précédemment stockées.

9. Architecture de circuit intégré à signal mixte selon la revendication 1, où chacune des cellules comprend une circuiterie pour transférer le contenu d'une mémoire (3) analogique donnée ou d'une mémoire (4) binaire donnée à une autre cellule voisine spécifiée selon un vecteur de décalage programmable de manière spatialement invariante, et ledit décalage étant réalisé de manière directe ou itérative, selon des critères d'optimisation de la circuiterie.

10. Architecture de circuit intégré à signal mixte selon la revendication 1, comprenant en outre des bancs de convertisseurs (15) de données AN et NA dans la périphérie de la matrice des cellules pour l'échange bidirectionnel d'images numérisées à échelle de gris en série avec l'extérieur du circuit intégré, à travers un ou plusieurs bus de données numériques, et les signaux de contrôle et des bus d'adresse correspondants.

11. Architecture de circuit intégré à signal mixte selon la revendication 10, comprenant en outre des bus de données pour un échange bidirectionnel d'images numérisées à échelle de gris en série, avec l'extérieur du circuit intégré.

12. Architecture de circuit intégré à signal mixte selon l'une quelconque des revendications précédentes, comprenant en outre un anneau (10) des cellules entourant la répartition des cellules spatialement régulière, utilisé pour établir les conditions de contour spatial dans les algorithmes de traitement des images, et ces conditions de contour étant électriquement programmables.

13. Architecture de circuit intégré à signal mixte selon l'une quelconque des revendications précédentes, comprenant en outre une circuiterie (16) globale dédiée à la compression et la transmission d'images binaires dispersées dans l'extérieur du réseau de cellules de prétraitement, avec des composants à l'intérieur des cellules (12) et dans la circuiterie (16) périphérique.

14. Architecture de circuit intégré à signal mixte selon l'une quelconque des revendications précédentes, comprenant en outre une circuiterie (12) analogique au niveau des cellules et au niveau global pour calculer les paramètres d'image généraux.

15. Architecture de circuit intégré à signal mixte selon l'une quelconque des revendications précédentes, comprenant en outre un système (11) numérique de traitement, de stockage et de contrôle pour réaliser les tâches de contrôle de la répartition des cellules et du système dans son ensemble, de traitement de l'informations et de communications externes, selon un programme préétabli stocké dans les mémoires internes.
